# EUROPEAN PATENT APPLICATION

(11) **EP 4 782 687 A1**
(43) Date of publication of application: **29.07.2026**
(21) Application number: 24882488.0
(22) Date of filing: 25.10.2024
(51) Int. Cl.: F04B 15/08, F17C 5/06

(54) **BOOSTER PUMP, LOW-TEMPERATURE FLUID SUPPLY SYSTEM, AND METHOD FOR DISCHARGING LOW-TEMPERATURE FLUID IN BOOSTER PUMP**

(30) Priority: 25.10.2023 JP 2023183051
(71) Applicant: Mitsubishi Heavy Industries, Ltd., Chiyoda-ku Tokyo 100-8332 (JP)
(72) Inventor: KAWANO, Shin, Tokyo 100-8332 (JP); HARADA, Motoshi, Tokyo 100-8332 (JP); KIHARA, Yuichi, Tokyo 100-8332 (JP)
(74) Representative: Studio Torta S.p.A.
(86) International application number: PCT/JP2024/038088
(87) International publication number: WO 2025/089380

(57) **Abstract**

In a pressurizing pump, a low-temperature fluid supply system, and a method for discharging a low-temperature fluid in the pressurizing pump, there are provided a casing that stores a low-temperature fluid, a cylinder that is disposed inside the casing to have a compression chamber, and has an upper end portion in a vertical direction supported by an upper portion of the casing, a piston that is movably supported inside the cylinder along the vertical direction and compresses a low-temperature fluid sucked into the compression chamber, and a drain pipe that has one end portion supported by an upper portion of the casing and the other end portion extending to a bottom portion of the casing.

## Description

### Field

The present disclosure relates to a pressurizing pump, a low-temperature fluid supply system, and a method for discharging a low-temperature fluid in the pressurizing pump.

### Background

As a system for realizing carbon neutrality, it is considered to apply hydrogen gas as a fuel. Hydrogen is stored in a tank in the state of liquid hydrogen, and the liquid hydrogen stored in the tank is vaporized to form hydrogen gas, and the hydrogen gas is supplied to, for example, a fuel cell or a hydrogen engine. The hydrogen supply system includes a pressurizing pump that pressurizes liquid hydrogen. As the pressurizing pump, for example, there is a technique described in Patent Literature 1.

### Citation List

### Patent Literature

Patent Literature 1: JP 2002-138950 A

### Summary

### Technical Problem

The pressurizing pump described in Patent Literature 1 includes a cylinder, a piston, a drive unit, a sump, an inlet valve, and an outlet valve. The pressurizing pump alternately sucks and compresses liquid by reciprocating the piston up and down, and ejects high-pressure liquid to the outside. The pressurizing pump needs to discharge all the liquid stored in the sump to the outside at the time of maintenance. In the conventional pressurizing pump, a sealed coupling portion is provided at a lower end portion of the sump, and liquid remaining in the sump is discharged to the outside from the sealed coupling portion. However, when there is a liquid discharge portion for maintenance at the lower end portion of the sump, there is a concern about external leakage of liquid during operation of the pressurizing pump. In addition, when the liquid stored in the sump is a low-temperature fluid, external heat is transferred from the liquid discharge portion to the sump, and there is a risk that the temperature of the liquid rises and vaporizes.

The present disclosure solves the above-described problems, and an object thereof is to provide a pressurizing pump and a low-temperature fluid supply system capable of suppressing leakage of a low-temperature fluid stored inside and suppressing a state change of the low-temperature fluid, and a method for discharging a low-temperature fluid in the pressurizing pump.

### Solution to Problem

To achieve the above object, a pressurizing pump according to the present disclosure includes: a casing that stores a low-temperature fluid; a cylinder that is disposed inside the casing to have a compression chamber, and has an upper end portion in a vertical direction supported by an upper portion of the casing; a piston that is movably supported inside the cylinder along the vertical direction and compresses a low-temperature fluid sucked into the compression chamber; and a drain pipe that has one end portion supported by an upper portion of the casing and the other end portion extending to a bottom portion of the casing.

A low-temperature fluid supply system according to the present disclosure includes: a compression device that includes the pressurizing pump to compress a low-temperature fluid; an evaporation device that vaporizes the low-temperature fluid compressed by the compression device; and a dispenser that supplies gas vaporized by the evaporation device.

A method according to the present disclosure is for discharging a low-temperature fluid in a pressurizing pump. The pressurizing pump includes: a casing that stores a low-temperature fluid; a cylinder that is disposed inside the casing to have a compression chamber, and has an upper end portion in a vertical direction supported by an upper portion of the casing; and a piston that is movably supported inside the cylinder along the vertical direction and compresses a low-temperature fluid sucked into the compression chamber. The method includes: a step of reciprocating the piston inside the cylinder to discharge a high-pressure low-temperature fluid pressurized in the compression chamber to the outside; a step of stopping reciprocating the piston when suction of low-temperature fluid into the compression chamber becomes impossible; and a step of discharging a low-temperature fluid remaining in the casing to the outside using a drain pipe having one end portion supported by an upper portion of the casing and the other end portion extending to a bottom portion of the casing.

### Advantageous Effects of Invention

According to the pressurizing pump and the low-temperature fluid supply system of the present disclosure, it is possible to suppress leakage of the low-temperature fluid stored therein and to suppress a state change of the low-temperature fluid.

### Brief Description of Drawings

FIG. 1 is a schematic diagram illustrating an overall configuration of a hydrogen supply system according to a first embodiment.
FIG. 2 is a longitudinal sectional view illustrating the compression device of the first embodiment.
FIG. 3 is a horizontal cross-sectional view (cross-sectional view taken along line III-III in FIG. 2) illustrating the pressurizing pump of the first embodiment.
FIG. 4 is a longitudinal sectional view illustrating a lower portion of a pressurizing pump of a second embodiment.
FIG. 5 is a schematic view illustrating a front end portion of a drain pipe.
FIG. 6 is a lower cross-sectional view illustrating a pressurizing pump of a first modification.
FIG. 7 is a lower cross-sectional view illustrating a pressurizing pump of a second modification.
FIG. 8 is a cross-sectional view taken along line VIII-VIII of FIG. 7.

### Description of Embodiments

Hereinafter, preferred embodiments of the present disclosure will be described in detail with reference to the drawings. Note that the present disclosure is not limited by the embodiments, and in a case where there is a plurality of embodiments, the present disclosure also includes a combination of the embodiments. In addition, the constituent elements in the embodiment include those that can be easily assumed by those skilled in the art, those that are substantially the same, and those in a so-called equivalent range.

### [First Embodiment]

### <Hydrogen supply system>

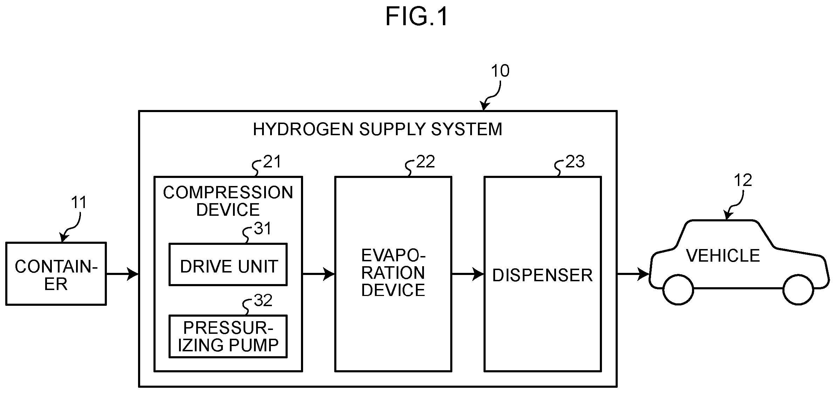

FIG. 1 is a schematic diagram illustrating an overall configuration of a hydrogen supply system according to the first embodiment.

As illustrated in FIG. 1, a hydrogen supply system (low-temperature fluid supply system) 10 supplies (replenishes) liquid hydrogen stored in a container 11 to a power source of a vehicle 12 as hydrogen gas having a predetermined pressure. Here, the power source is, for example, a fuel cell, a hydrogen engine, or the like, and is mounted on the vehicle 12. The hydrogen supply system 10 is, for example, a so-called hydrogen station that supplies (replenishes) hydrogen gas as fuel to the power source of the vehicle 12. However, the hydrogen supply system 10 is not limited to a system that supplies hydrogen gas to the power source of the vehicle 12, and includes a system that supplies hydrogen gas to a trailer tank for transporting hydrogen. In addition, the hydrogen supply system 10 operates not only in the case of hydrogen but also in the case of compressing and supplying a low-temperature fluid (for example, liquid hydrogen, liquid nitrogen, liquid oxygen, liquefied carbon dioxide gas, liquefied natural gas, liquefied propane gas, and the like).

The hydrogen supply system 10 includes a compression device 21, an evaporation device 22, and a dispenser 23. The compression device 21 compresses liquid hydrogen (low-temperature fluid) supplied from the container 11 to a predetermined high pressure (high pressure state) set in advance. The evaporation device 22 vaporizes high-pressure liquid hydrogen compressed by the compression device 21 to generate hydrogen gas. The dispenser 23 fills the power source of the vehicle 12 with hydrogen gas generated by the evaporation device 22.

The compression device 21 compresses the liquid hydrogen stored in the container 11 to a predetermined high pressure, but is not limited to this configuration.

The compression device 21 includes a drive unit 31 and a pressurizing pump 32. Although not illustrated, the drive unit 31 includes a drive motor and a drive mechanism. The drive motor is an electric motor that can be driven by power supplied from the outside. The rotation speed of the drive motor is controlled by an inverter (not illustrated). The drive mechanism includes a crank mechanism and converts rotational power of the drive motor into linear reciprocating power. The drive motor transmits the rotational power to the drive mechanism, and the drive mechanism transmits the linear reciprocating power to the pressurizing pump 32. The pressurizing pump 32 is operated by the drive unit 31 to compress liquid hydrogen. The drive unit 31 may include a speed reducer between the drive motor and the drive mechanism.

### <Compression device>

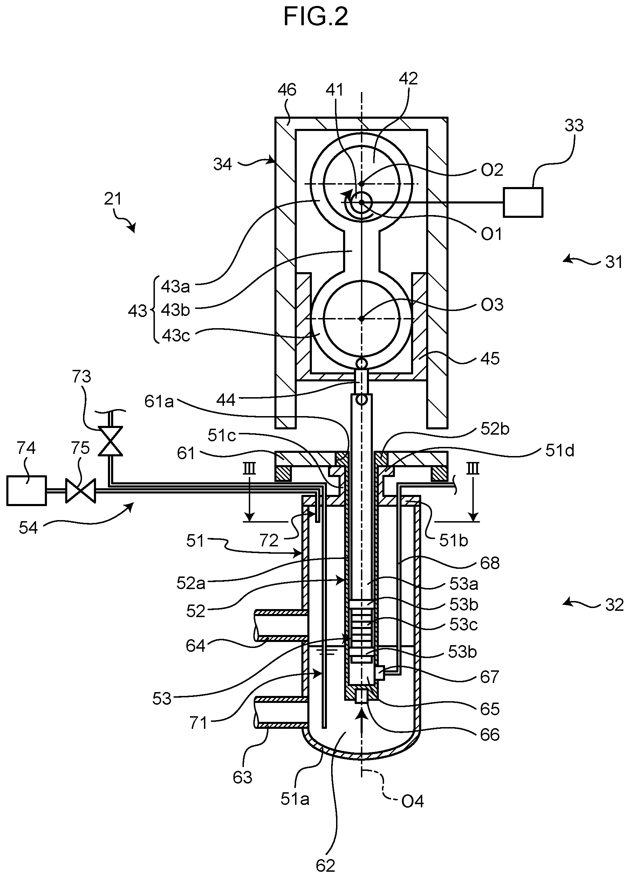

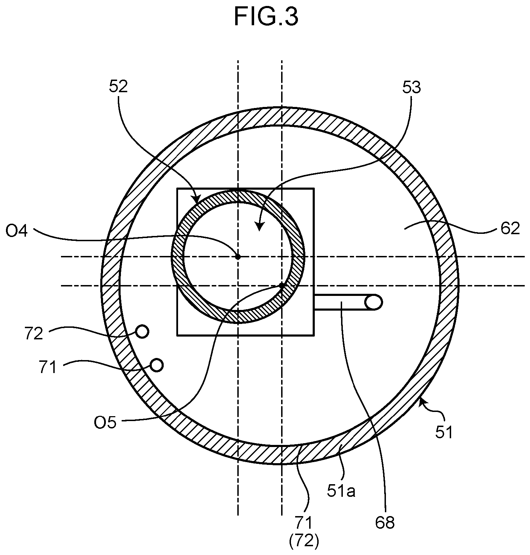

FIG. 2 is a longitudinal sectional view illustrating the compression device of the first embodiment, and FIG. 3 is a horizontal cross-sectional view (cross-sectional view taken along line III-III in FIG. 2) illustrating the pressurizing pump of the first embodiment.

As illustrated in FIG. 2, the compression device 21 includes a drive unit 31 and a pressurizing pump 32, and the drive unit 31 includes a drive motor 33 and a drive mechanism 34. The compression device 21 (pressurizing pump 32) is a device for pressurizing liquid hydrogen, which is a cryogenic liquid, to a high pressure (about 90 MPa).

### <Drive unit>

The drive mechanism 34 includes an eccentric shaft portion 41, a rotating body 42, a link portion 43, a swing shaft portion 44, a crosshead 45, and a housing 46.

The eccentric shaft portion 41 has a cylindrical shape and is disposed along the horizontal direction. The eccentric shaft portion 41 is rotatably supported about an axis O1 along the horizontal direction. The eccentric shaft portion 41 is coupled to a front end portion of an output shaft 33a of the drive motor 33. When the drive motor 33 is driven, the output shaft 33a rotates, the rotational power of the output shaft 33a is transmitted to the eccentric shaft portion 41, and the eccentric shaft portion 41 rotates.

The rotating body 42 has a disk shape, is disposed outside the eccentric shaft portion 41, and is rotatable integrally with the eccentric shaft portion 41. The rotating body 42 has a center along the axis O2, and the center (axis O2) of the rotating body 42 and the center (axis O1) of the eccentric shaft portion 41 are shifted in the radial direction. That is, the center (axis O1) of the eccentric shaft portion 41 is provided at a position returned with respect to the center (axis O2) of the rotating body 42. When the eccentric shaft portion 41 rotates, the rotating body 42 swings and rotates about the axis O1.

The link portion 43 constitutes a crank mechanism, converts rotational power into linear reciprocating power, and transmits the linear reciprocating power to the pressurizing pump 32. The link portion 43 includes an upper annular portion 43a, a connecting portion 43b, and a lower annular portion 43c. The upper annular portion 43a has an annular shape. The upper annular portion 43a is disposed outside the rotating body 42 via a bearing portion (not illustrated) and is rotatable relative to the rotating body 42. The lower annular portion 43c has an annular shape. The connecting portion 43b is disposed between the upper annular portion 43a and the lower annular portion 43c, and integrally couples the upper annular portion 43a and the lower annular portion 43c.

When the eccentric shaft portion 41 rotates and the rotating body 42 swings and rotates about the axis O1, the link portion 43 operates. That is, in the link portion 43, the upper annular portion 43a swings about the axis O1 by the rotation of the rotating body 42, the swing power of the upper annular portion 43a is transmitted to the lower annular portion 43c via the connecting portion 43b, and the lower annular portion 43c linearly reciprocates in the vertical direction while rotating about the axis O3 parallel to the axes O1 and O2.

An upper end portion of the swing shaft portion 44 is coupled to a lower end portion of the lower annular portion 43c of the link portion 43. A lower end portion of the swing shaft portion 44 is coupled to an upper end portion of a piston 53 described later in the pressurizing pump 32. The swing shaft portion 44 is swingable about a swing shaft along the horizontal direction with respect to the lower annular portion 43c and the piston 53 between the lower annular portion 43c and the piston 53.

The crosshead 45 has a bottomed cylindrical shape that covers the lower annular portion 43c from the outside. The housing 46 is disposed on the outer peripheral side of the crosshead 45. The housing 46 is supported by a frame (not illustrated), and the crosshead 45 is supported so as to be movable along the vertical direction with respect to the housing 46. The lower annular portion 43c of the link portion 43 is rotatably supported by the crosshead 45. When the eccentric shaft portion 41 and the rotating body 42 rotate and the link portion 43 reciprocates along the vertical direction, the lower annular portion 43c and the crosshead 45 reciprocate along the vertical direction with respect to the housing 46.

### <Pressurizing pump>

As illustrated in FIGS. 2 and 3, the pressurizing pump 32 includes a casing 51, a cylinder 52, and a piston 53.

### <Casing>

The casing 51 is a pressure vessel that stores liquid hydrogen, and is also a heat insulating vacuum vessel. A support plate 61 is disposed along the horizontal direction and is installed on a frame (not illustrated). The support plate 61 is provided with a through hole 61a at a position on an axis O4 along the vertical direction. The casing 51 includes a casing main body 51a, a middle flange portion 51b, a support tube portion 51c, and an upper flange portion 51d. The casing main body 51a is a heat insulating structure having a bottomed cylindrical shape, and an internal liquid storage chamber 62 is formed therein. The middle flange portion 51b has a disk shape, and a circular hole is formed at the center position. The middle flange portion 51b is integrally fastened to the upper end portion of the casing main body 51a. A support tube portion 51c having a smaller diameter than the casing main body 51a is integrally provided in the upper portion of the middle flange portion 51b. The upper flange portion 51d having a larger diameter than the support tube portion 51c is integrally provided at the upper end portion of the support tube portion 51c, and a circular hole is formed at the center position of the upper flange portion 51d. In the casing 51, the upper flange portion 51d is in close contact with the lower surface of the support plate 61 and is bolted. That is, the upper end portion of the casing 51 is suspended and supported by the support plate 61.

In the casing 51, a supply pipe 63 and the gas discharge pipe 64 are coupled to a side portion of the casing main body 51a. The supply pipe 63 is a pipe for supplying liquid hydrogen from an external supply source to the liquid storage chamber 62 of the casing 51. The supply pipe 63 is provided near the bottom portion of the casing 51. The gas discharge pipe 64 is a pipe for discharging a component (hydrogen gas) vaporized in the liquid storage chamber 62 to the outside. The gas discharge pipe 64 is disposed at a position spaced above the supply pipe 63. The liquid storage chamber 62 stores liquid hydrogen, and the liquid level of the liquid hydrogen is adjusted to be located below the gas discharge pipe 64.

### <Cylinder>

The cylinder 52 is a container for compressing liquid hydrogen. The cylinder 52 includes a cylinder main body 62a and a flange portion 62b. The cylinder main body 52a has a bottomed cylindrical shape, and a compression chamber 65 is provided on the lower side of the inside. A flange portion 52b having a diameter larger than that of the cylinder main body 52a is integrally provided at an upper end portion of the cylinder main body 52a, and a center portion of the flange portion 52b is opened. The flange portion 52b of the cylinder 52 is fitted into the through hole 61a of the support plate 61, and is placed on the upper surface of the upper flange portion 51d of the casing 51. That is, the upper end portion of the cylinder 52 is suspended and supported by the support plate 61. In addition, a seal member (not illustrated) is provided between the flange portion 52b of the cylinder 52 and the upper flange portion 51d of the casing 51.

A suction valve 66 is provided at the bottom portion of the cylinder 52. The suction valve 66 is for introducing liquid hydrogen in the liquid storage chamber 62 into the compression chamber 65. That is, the suction valve 66 is a check valve, and is opened when the pressure of the compression chamber 65 becomes lower than the pressure of the liquid storage chamber 62, and the liquid hydrogen in the liquid storage chamber 62 is introduced into the compression chamber 65. On the other hand, the suction valve 66 is closed when the pressure of the compression chamber 65 becomes higher than the pressure of the liquid storage chamber 62, and the liquid hydrogen in the compression chamber 65 is prevented from flowing back to the liquid storage chamber 62. Although the suction valve 66 is illustrated to be exposed to the outside of the cylinder 52 in FIG. 2, FIG. 2 is a schematic view, and the suction valve 66 is actually provided inside the cylinder 52.

An eject valve 67 is provided on the lower side portion of the cylinder 52. The eject valve 67 is for ejecting (discharging) high-pressure liquid water compressed in the compression chamber 65 to the outside. That is, the eject valve 67 is a check valve, and is opened when the pressure in the compression chamber 65 becomes higher than the pressure on the discharge side, and ejects high-pressure liquid hydrogen in the compression chamber 65 to the outside. On the other hand, the eject valve 67 is closed when the pressure of the compression chamber 65 becomes lower than the pressure on the discharge side, and high-pressure liquid hydrogen on the discharge side is prevented from flowing back to the compression chamber 65. Although the eject valve 67 is illustrated to be exposed to the outside of the cylinder 52 in FIG. 2, FIG. 2 is a schematic view, and the eject valve 67 is actually provided inside the cylinder 52.

A discharge pipe 68 is coupled to the eject valve 67. The discharge pipe 68 is a pipe for discharging high-pressure liquid hydrogen compressed in the compression chamber 35 to the outside. The discharge pipe 68 is disposed adjacent to the cylinder 52 inside the casing 51. The cylinder 52 is disposed at a position (axis O4) shifted to one side in the radial direction from the center (axis O5) of the casing 51. The discharge pipe 68 is disposed at a position shifted to the other side in the radial direction from the center (axis O5) of the casing 51. The discharge pipe 68 is disposed along the vertical direction, has a lower end portion coupled to the lower portion of the cylinder 52, and communicates with the compression chamber 65 via the eject valve 67. The upper end portion of the discharge pipe 68 extends to the outside through the upper portion of the casing 51 and is supported by the upper portion of the casing 51.

### <Piston>

The piston 53 includes a piston main body 53a, a wear ring 53b, and a piston ring 53c. The piston main body 53a has an elongated cylindrical shape and is disposed inside the cylinder 52. The piston main body 53a is disposed along the axis O4 along the vertical direction. The piston main body 53a has a constant outer diameter over the entire region in the direction of the axis O4. An upper end portion of the piston main body 53a is coupled to the drive unit 31.

The piston main body 53a has a lower end portion to which a plurality of wear rings 53b and a plurality of piston rings 53c are attached. The wear ring 53b is provided at the front end portion of the piston main body 53a. The wear ring 53b has an annular shape centered on the axis O4 and is formed of a resin material. The piston ring 53c is provided at the front end portion of the piston main body 53a. The piston ring 53c has an annular shape centered on the axis O4 and is formed of a resin material.

That is, the piston 53 is provided with one wear ring 53b at the lower end portion of the piston main body 53a, and further provided with one wear ring 53b spaced apart from the wear ring 53b in the direction of the axis O4. In the piston 53, a plurality of piston rings 53c is provided between the pair of wear rings 53b at intervals in the direction of the axis O4. The wear ring 53b is provided to guide the piston main body 53a along the inner peripheral surface of the cylinder 52. The piston ring 53c is provided to maintain liquid tightness and airtightness between the piston ring 53c and the inner peripheral surface of the cylinder 52.

The compression chamber 65 is defined at the lower end portion of the cylinder 52 by disposing the piston 53 inside. The piston 53 reciprocates in the cylinder 52 along the direction of the axis O4 by the drive unit 31. When the piston 53 moves upward inside the cylinder 52, the volume of the compression chamber 65 increases and the pressure decreases, and liquid hydrogen is sucked. When the piston 53 moves downward inside the cylinder 52, the volume of the compression chamber 65 decreases and the pressure increases, and the liquid hydrogen is compressed. In the cylinder 52, a seal member is provided on the opening inner peripheral surface of the flange portion 52d to seal a gap with the outer peripheral surface of the piston main body 53a.

### <Arrangement of cylinder and piston>

The cylinder 52 is disposed at a position shifted to one side in the radial direction from the center of the casing 51. That is, the center position of the cylinder 52 is located on the axis O4. The center position of the casing 51 is located on the axis O5. That is, in the casing 51, the center position of the casing main body 51a is located on the axis O5, and the center positions of the support tube portion 51c and the upper flange portion 51d are located on the axis O4. Therefore, the cylinder 52 is arranged such that the center (axis O4) is shifted by a predetermined distance from the center (axis O5) of the casing main body 51a in the casing 51 to one side in the radial direction.

### <Liquid hydrogen discharge device>

The pressurizing pump 32 includes a liquid hydrogen discharge device 54 in addition to the casing 51, the cylinder 52, and the piston 53.

The liquid hydrogen discharge device 54 includes a drain pipe 71 and a pressurizing pipe 72. The drain pipe 71 discharges liquid hydrogen remaining in the casing 51 to the outside. One end portion of the drain pipe 71 is supported by the upper portion of the casing 51, and the other end portion extends to the bottom portion of the casing 51. That is, as described above, the casing 51 includes the casing main body 51a which is a heat insulating structure having a bottomed cylindrical shape, and the middle flange portion (lid portion) 51b that closes the upper portion of the casing main body 51a. The middle flange portion 51b is not a heat insulating structure, but may be a heat insulating structure. The drain pipe 71 has an upper end portion fixed by penetrating the middle flange portion 51b in the thickness direction, and a lower end portion extending to the vicinity of the bottom surface of the casing 51. In this case, it is preferable that the lower end portion of the drain pipe 71 is opened, and the opening portion faces the bottom surface of the casing 51 with a minute gap.

The drain pipe 71 is provided with a drain valve 73 outside the casing 51. The drain valve 73 can open and close a flow path of the drain pipe 71. One end portion of the drain pipe 71 is opened to the atmosphere outside the casing 51, and when the drain valve 73 is opened, the liquid storage chamber 62 of the casing 51 communicates with the atmosphere. One end portion of the drain pipe 71 is not necessarily opened to the atmosphere, and may be coupled to a supply source of liquid hydrogen to which the liquid storage chamber 62 may be coupled via the supply pipe 63.

The pressurizing pipe 72 pressurizes the inside of the casing 51 (liquid storage chamber 62) by supplying gas from the outside to the inside of the casing 51. One end portion of the pressurizing pipe 72 is supported by an upper portion of the casing 51, and the other end portion is disposed inside the casing 51. That is, the upper end portion of the pressurizing pipe 72 is fixed by penetrating the middle flange portion 51b in the thickness direction, and the lower end portion thereof is located in the upper portion of the casing 51, that is, in the gas phase portion above the liquid level of the liquid hydrogen.

In the pressurizing pipe 72 outside the casing, a pressurizing source 74 is connected to one end portion, and a pressurizing valve 75 is provided in a middle portion. The pressurizing source 74 can supply a fluid for pressurizing the inside of the casing 51 to the pressurizing pipe 72. The pressurizing valve 75 can open and close a flow path of the pressurizing pipe 72. When the pressurizing valve 75 is opened, the liquid storage chamber 62 of the casing 51 communicates with the pressurizing source 74. The fluid supplied by the pressurizing source 74 is preferably gas obtained by heating the same kind of low-temperature fluid as the low-temperature fluid (liquid hydrogen) stored in the casing 51. That is, it is preferable that the pressurizing source 74 is coupled to the supply source of liquid hydrogen described above, heats the liquid hydrogen to form hydrogen gas, and supplies the hydrogen gas to the pressurizing pipe 72.

### <Operation of compression device>

As illustrated in FIG. 2, when the drive motor 33 is driven, the eccentric shaft portion 41 rotates, and the rotating body 42 swings and rotates. Then, the link portion 43 operates to convert the turning power into linear reciprocating power, and transmits the linear reciprocating power to the pressurizing pump 32 via the swing shaft portion 44. When the pressurizing pump 32 operates, first, liquid hydrogen in the casing 51 is sucked into the compression chamber 65 in a suction process in which the piston 53 rises. Next, in a compression process in which the piston 53 descends, liquid hydrogen in the compression chamber 65 is compressed, and high-pressure liquid hydrogen is ejected to the discharge pipe 68.

### <Maintenance of pressurizing pump>

The pressurizing pump 32 needs to discharge all the liquid hydrogen stored in the liquid storage chamber 62 of the casing 51 to the outside at the time of maintenance. In this case, the lower end portion of the cylinder 52 is disposed in the lower portion of the casing 51. Therefore, when the liquid level of the liquid hydrogen stored in the liquid storage chamber 62 becomes lower than a suction portion at the lower end portion of the cylinder 52, the pressurizing pump 32 cannot compress the liquid hydrogen stored in the liquid storage chamber 62 and discharge the liquid hydrogen to the outside. In this case, by detecting the flow rate and the pressure of the liquid hydrogen discharged from the discharge pipe 68, it is possible to detect the inability to discharge the liquid hydrogen by the pressurizing pump 32. At this time, the operation of the pressurizing pump 32 is stopped, and thereafter, the liquid hydrogen in the liquid storage chamber 62 is discharged to the outside by the liquid hydrogen discharge device 54.

After stopping the operation of the pressurizing pump 32, first, the pressurizing valve 75 is opened. Then, the pressurizing source 74 supplies the hydrogen gas generated by heating the liquid hydrogen to the liquid storage chamber 62 of the casing 51 through the pressurizing pipe 72. In the casing 51, the liquid storage chamber 62 is pressurized by the hydrogen gas supplied from the pressurizing pipe 72, and the pressure increases. In addition, in the casing 51, liquid hydrogen is stored in a bottom portion 51e, and the liquid hydrogen is pressurized and heated by the hydrogen gas supplied from the pressurizing pipe 72 to become hydrogen gas.

Next, the drain valve 73 is opened. The liquid storage chamber 62 of the casing 51 is in a pressurized state filled with hydrogen gas, and the flow path of the drain pipe 71 is opened by the drain valve 73, so that the hydrogen gas in the liquid storage chamber 62 is pushed out to the drain pipe 71 and discharged to the outside through the drain pipe 71. At this time, unvaporized liquid hydrogen is also discharged from the drain pipe 71 to the outside. When all the liquid hydrogen remaining in the liquid storage chamber 62 of the casing 51 is discharged, the drain valve 73 and the pressurizing valve 75 are closed. Thereafter, for example, an inert gas (for example, nitrogen gas) at room temperature is supplied to the liquid storage chamber 62 of the casing 51 using the pressurizing pipe 72, and discharged to the outside using the drain pipe 71, whereby the temperature of the casing 51 may be increased to room temperature.

When the liquid hydrogen is discharged from the liquid storage chamber 62 of the casing 51 and the temperature of the casing 51 rises to room temperature, maintenance work of the pressurizing pump 32 is performed.

In the pressurizing pump 32 according to the first embodiment, the upper one end portion of the drain pipe 71 is supported by the upper portion of the casing 51, and the other end portion extends to the bottom portion of the casing 51. During operation of a pressurizing pump 32B, the flow path of the drain pipe 71 is closed by the drain valve 73, but external heat is easily transferred to liquid hydrogen in the liquid storage chamber 62 of the casing 51 through the drain pipe 71. However, since the drain pipe 71 is supported on the upper portion of the casing 51 and is partially disposed in a space portion filled with the hydrogen gas, sufficient cooling is performed, the external heat is hardly transferred to the liquid hydrogen in the liquid storage chamber 62, and the temperature rise of the liquid hydrogen can be suppressed.

### [Second Embodiment]

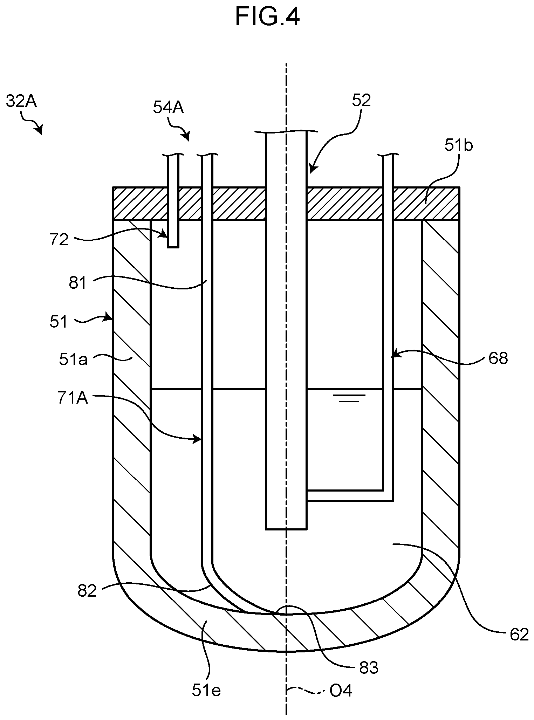

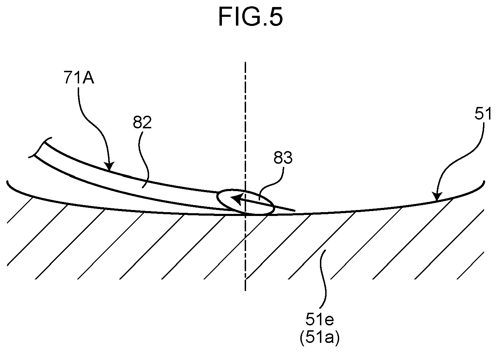

FIG. 4 is a longitudinal sectional view illustrating a lower portion of a pressurizing pump of a second embodiment, and FIG. 5 is a schematic view illustrating a front end portion of a drain pipe.

### <Liquid hydrogen discharge device>

As illustrated in FIG. 4, a pressurizing pump 32A includes a casing 51, a cylinder 52, a piston 53, and a liquid hydrogen discharge device 54A.

The liquid hydrogen discharge device 54A includes a drain pipe 71A and a pressurizing pipe 72. The pressurizing pipe 72 is the same as that of the first embodiment.

The drain pipe 71A discharges liquid hydrogen remaining in the casing 51 to the outside. One end portion of the drain pipe 71A is supported by the upper portion of the casing 51, and the other end portion extends to the bottom portion of the casing 51. That is, the drain pipe 71A has an upper end portion fixed by penetrating the middle flange portion 51b in the thickness direction, and a lower end portion extending to the vicinity of the bottom surface of the casing 51.

The drain pipe 71A is disposed such that a lower end portion thereof is curved and extends along the bottom surface of the casing 51. That is, in the casing 51, the bottom portion 51e of the casing main body 51a has a curved shape protruding downward in the vertical direction. Therefore, in the casing main body 51a, the position of the bottom surface of the center (axis O4) in the bottom portion 51e is the lowermost end position of the liquid storage chamber 62. It is preferable that the drain pipe 71A is disposed such that the lower end portion thereof is curved and extends along the bottom surface of the casing 51, and the lower end thereof is located at the lowermost end position of the bottom surface of the bottom portion 51e.

As illustrated in FIGS. 4 and 5, the drain pipe 71A includes a linear portion 81, a curved portion 82, and an opening portion 83. The linear portion 81 is disposed along the vertical direction inside the casing main body 51a of the casing 51. The curved portion 82 is coupled to a lower end portion of the linear portion 81. The curved portion 82 has an opening portion 83 formed at a front end portion along the bottom surface of the bottom portion 51e. The opening portion 83 has an opening surface inclined with respect to the axial direction of the drain pipe 71A. That is, although the drain pipe 71A (linear portion 81 and curved portion 82) is a cylindrical pipe, the opening surface of the opening portion 83 has an elliptical shape by obliquely cutting the front end portion.

In the drain pipe 71A, similarly to the drain pipe 71, a drain valve 73 (see FIG. 2) is provided outside the casing 51.

Therefore, when the pressurizing valve 75 (see FIG. 2) is opened after the operation of the pressurizing pump 32A is stopped, the heated hydrogen gas is supplied to the liquid storage chamber 62 of the casing 51 through the pressurizing pipe 72. In the casing 51, the liquid storage chamber 62 is pressurized by the hydrogen gas supplied from the pressurizing pipe 72, and the pressure increases. In addition, in the casing 51, liquid hydrogen is stored in a bottom portion 51e, and the liquid hydrogen is pressurized and heated by the hydrogen gas supplied from the pressurizing pipe 72 to become hydrogen gas.

Here, when the drain valve 73 (see FIG. 2) is opened, hydrogen gas in the liquid storage chamber 62 of the casing 51 is pushed out to the drain pipe 71A and discharged to the outside through the drain pipe 71A. At this time, since the opening portion 83 is located in the bottom surface of the bottom portion 51e of the casing 51, the drain pipe 71A can discharge all the liquid hydrogen remaining in the bottom portion 51e of the liquid storage chamber 62 of the casing 51 to the outside. When all the liquid hydrogen remaining in the liquid storage chamber 62 of the casing 51 is discharged, the drain valve 73 and the pressurizing valve 75 are closed.

### <Modification>

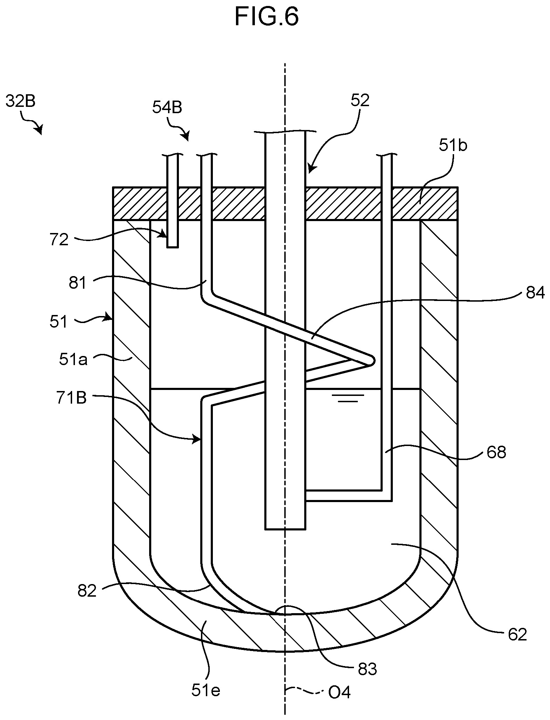

FIG. 6 is a lower cross-sectional view illustrating a pressurizing pump of a first modification.

As illustrated in FIG. 6, a pressurizing pump 32B according to the first modification includes a casing 51, a cylinder 52, a piston 53, and a liquid hydrogen discharge device 54B.

The liquid hydrogen discharge device 54B includes a drain pipe 71B and a pressurizing pipe 72. The pressurizing pipe 72 is the same as that of the first embodiment.

The drain pipe 71B discharges liquid hydrogen remaining in the casing 51 to the outside. One end portion of the drain pipe 71B is supported by the upper portion of the casing 51, and the other end portion extends to the bottom portion of the casing 51. That is, the drain pipe 71B has an upper end portion fixed by penetrating the middle flange portion 51b in the thickness direction, and a lower end portion extending to the vicinity of the bottom surface of the casing 51.

The drain pipe 71B is disposed such that a lower end portion thereof is curved and extends along the bottom surface of the casing 51. The drain pipe 71B includes a linear portion 81, a curved portion 82, an opening portion 83, and a spiral portion 84. The linear portion 81 is disposed along the vertical direction inside the casing main body 51a of the casing 51. The spiral portion 84 is coupled to the lower end portion of the linear portion 81 and is disposed so as to turn around the cylinder 52. The spiral portion 84 is disposed above the liquid level of the liquid hydrogen in the liquid storage chamber 62. The curved portion 82 is coupled to a lower end portion of the spiral portion 84. The curved portion 82 has an opening portion 83 formed at a front end portion along the bottom surface of the bottom portion 51e. The opening portion 83 has an opening surface inclined with respect to the axial direction of the drain pipe 71B.

Note that the spiral portion 84 is not limited to the above-described configuration. The spiral portion 84 may be disposed so as to turn around the cylinder 52 not only one turn but also a plurality of turns. Further, the spiral portion 84 may be disposed so as to turn around the position of the linear portion 81 without turning around the cylinder 52.

In the drain pipe 71B, a spiral portion 84 is provided between the linear portion 81 and the curved portion 82, and the spiral portion 84 is disposed above the liquid surface of the liquid hydrogen in the liquid storage chamber 62. During operation of the pressurizing pump 32B, the flow path of the drain pipe 71B is closed by the drain valve 73 (see FIG. 2), but external heat is easily transferred to liquid hydrogen in the liquid storage chamber 62 of the casing 51 through the drain pipe 71B. However, in the drain pipe 71B, since the linear portion 81 and the spiral portion 84 are disposed in a space portion filled with the hydrogen gas, sufficient cooling is performed, the external heat is hardly transferred to the liquid hydrogen in the liquid storage chamber 62, and the temperature rise of the liquid hydrogen can be suppressed.

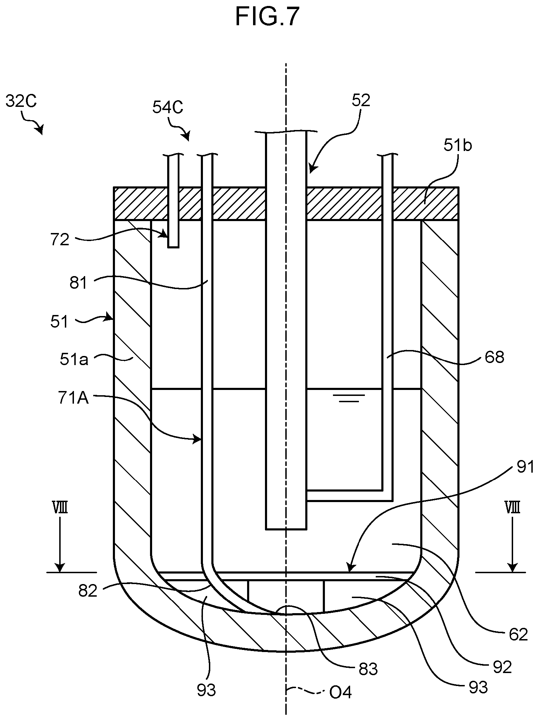

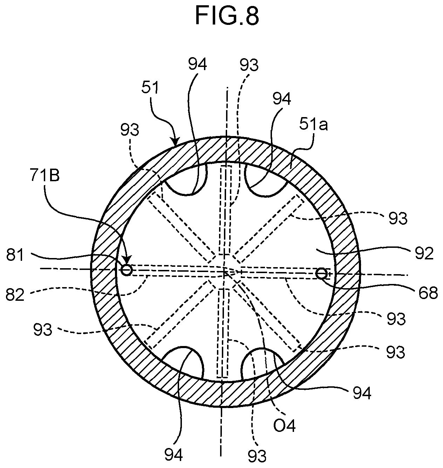

FIG. 7 is a lower cross-sectional view illustrating a pressurizing pump of a second modification, and FIG. 8 is a cross-sectional view taken along line VIII-VIII of FIG. 7.

As illustrated in FIGS. 7 and 8, a pressurizing pump 32C according to the second modification includes a casing 51, a cylinder 52, a piston 53, and a liquid hydrogen discharge device 54C.

The liquid hydrogen discharge device 54C includes a drain pipe 71A, a pressurizing pipe 72, and a guide member 91. The drain pipe 71A and the pressurizing pipe 72 are the same as those of the second embodiment.

The guide member 91 includes a horizontal plate 92 and a plurality of guide plates 93. The horizontal plate 92 has a disk shape, and has an outer diameter slightly smaller than an inner diameter of the cylindrical portion of the casing main body 51a in the casing 51. The horizontal plate 92 is disposed slightly above the bottom surface of the bottom portion 51e of the casing main body 51a, and the outer peripheral portion thereof is in contact with the inner peripheral portion of the bottom portion 51e. The plurality of guide plates 93 is coupled to the lower surface of the horizontal plate 92 at intervals in the circumferential direction. The plurality of guide plates 93 is arranged radially from the center (axis O4) of the casing main body 51a along the radial direction of the casing main body 51a. However, the plurality of guide plates 93 is not excreted to the center (axis O4) of the horizontal plate 92. The lower surface of the guide plate 93 is in close contact with the bottom surface of the bottom portion 51e by forming a substantially triangular shape.

In the guide member 91, the horizontal plate 92 is provided with a plurality of notches 94. The inside of the casing 51 communicates between the upper portion and the lower portion of the horizontal plate 92 via the notches 94 provided in the horizontal plate 92. A lower end portion of the drain pipe 71A penetrates the horizontal plate 92.

When the pressurizing pump 32C is stopped, the liquid hydrogen remaining in the liquid storage chamber 62 of the casing 51 gathers at the center of the bottom portion 51e along the plurality of guide plates 93 of the guide member 91. Therefore, the drain pipe 71A can take in the liquid hydrogen gathered at the center of the bottom portion 51e from the opening portion 83 and discharge all the liquid hydrogen to the outside.

### [Function and effect of present embodiment]

A pressurizing pump according to a first aspect includes a casing 51 that stores liquid hydrogen (low-temperature fluid), a cylinder 52 that is disposed inside the casing 51 to have a compression chamber 65, and has an upper end portion in a vertical direction supported by an upper portion of the casing 51, a piston 53 that is movably supported inside the cylinder 52 along the vertical direction and compresses the liquid hydrogen sucked into the compression chamber 65, and drain pipes 71, 71A, and 71B having one end portion supported by an upper portion of the casing 51 and the other end portion extending to a bottom portion 51e of the casing 51.

According to the pressurizing pump according to the first aspect, the external heat is transferred to the drain pipes 71, 71A, and 71B when the pressurizing pumps 32, 32A, 32B, and 32C are operated. However, since the drain pipes 71, 71A, and 71B extend from the upper portion of the casing 51 to the bottom portion 51e, a part thereof is cooled by the hydrogen gas inside the casing 51, the external heat is hardly transferred to the liquid hydrogen in the liquid storage chamber 62, and the temperature rise of the liquid hydrogen can be suppressed. As a result, leakage of fluid hydrogen stored inside the casing 51 can be suppressed, and a state change of liquid hydrogen can be suppressed.

A pressurizing pump according to a second aspect is the pressurizing pump according to the first aspect, in which the casing 51 further includes a casing main body 51a that is a heat insulating structure having a bottomed cylindrical shape, and a middle flange portion (lid portion) 51b that closes an upper portion of the casing main body 51a, and one end portion of each of the drain pipes 71, 71A, and 71B is supported by penetrating the middle flange portion 51b. As a result, by using the casing main body 51a as the heat insulating structure, the liquid hydrogen stored in the casing main body 51a can be maintained at an appropriate temperature, and by supporting the upper end portions of the drain pipes 71, 71A, and 71B by the middle flange portion 51b, it is not necessary to provide a support hole or the like of the casing main body 51a as the heat insulating structure, and it is possible to suppress deterioration of the cooling function of the casing main body 51a.

A pressurizing pump according to a third aspect is the pressurizing pump according to the first aspect or the second aspect, and further, the drain pipes 71A and 71B are disposed such that the other end portions thereof are curved and extend along the bottom surface of the casing 51. As a result, all the liquid hydrogen in the bottom portion 51e of the casing 51 can be discharged to the outside by the drain pipes 71A and 71B.

The pressurizing pump according to a fourth aspect is the pressurizing pump according to the third aspect, and the drain pipes 71A and 71B include a linear portion 81 disposed along a vertical direction inside the casing 51, a curved portion 82 coupled to a lower end portion of the linear portion 81, and an opening portion 83 disposed at a front end portion of the curved portion 82 and serving as an opening surface inclined with respect to an axial direction. Accordingly, the lower end portions of the drain pipes 71A and 71B can be appropriately disposed along the bottom portion 51e of the casing 51.

A pressurizing pump according to a fifth aspect is the pressurizing pump according to any one of the first aspect to the fourth aspect, and further, the drain pipes 71, 71A, and 71B are provided with a drain valve 73 for opening and closing a flow path outside the casing. Accordingly, by closing the drain valve 73 during operation of the pressurizing pumps 32, 32A, 32B, and 32C, heat transfer from the outside to the inside of the casing 51 can be suppressed, and leakage of liquid hydrogen inside the casing 51 to the outside can be suppressed.

A pressurizing pump according to a sixth aspect is the pressurizing pump according to any one of the first aspect to the fifth aspect, and further includes a pressurizing pipe 72 supported by an upper portion of the casing 51 and capable of supplying gas from an outside to an inside of the casing 51 to pressurize the gas. Accordingly, by supplying gas to the inside of the casing 51 by the pressurizing pipe 72 and pressurizing the gas, liquid hydrogen and hydrogen gas in the inside of the casing 51 can be efficiently discharged from the drain pipes 71, 71A, and 71B.

A pressurizing pump according to a seventh aspect is the pressurizing pump according to the sixth aspect, and further, the pressurizing pipe 72 supplies gas obtained by heating liquid hydrogen of the same type as the liquid hydrogen stored in the casing 51 to the inside of the casing 51. As a result, the liquid hydrogen can be efficiently used, and the hydrogen gas discharged to the outside of the casing 51 can be collected and reused.

A pressurizing pump according to an eighth aspect is the pressurizing pump according to any one of the first aspect to the seventh aspect, and further, the casing 51 has a bottom surface having a curved shape protruding downward in the vertical direction. As a result, the liquid hydrogen remaining in the casing 51 can be collected at the center position of the bottom portion 51e, and the liquid hydrogen can be appropriately discharged by the drain pipes 71, 71A, and 71B.

A hydrogen supply system (low-temperature fluid supply system) according to a ninth aspect includes a compression device 21 that includes the pressurizing pumps 32, 32A, 32B, and 32C according to any one of the first aspect to eighth aspect and compresses liquid hydrogen (low-temperature fluid), an evaporation device 22 that vaporizes the liquid hydrogen compressed by the compression device 21, and a dispenser 23 that supplies hydrogen gas vaporized by the evaporation device 22. As a result, in the pressurizing pumps 32, 32A, 32B, and 32C, leakage of liquid hydrogen stored inside the casing 51 can be suppressed, and a state change of liquid hydrogen can be suppressed.

A method for discharging low-temperature fluid in a pressurizing pump according to a tenth aspect includes a step of reciprocating the piston 53 inside the cylinder 52 to discharge high-pressure liquid hydrogen pressurized in the compression chamber 65 to the outside, a step of stopping reciprocating the piston 53 when suction of liquid hydrogen into the compression chamber 65 becomes impossible, and a step of discharging fluid hydrogen remaining in the casing 51 to the outside using a drain pipe 71 having one end portion supported by an upper portion of the casing 51 and the other end portion extending to a bottom portion 51e of the casing 51. As a result, fluid hydrogen remaining in the casing 51 can be appropriately discharged, leakage of liquid hydrogen stored inside the casing 51 can be suppressed, and a state change of liquid hydrogen can be suppressed.

### Reference Signs List

- 10: HYDROGEN SUPPLY SYSTEM (LOW-TEMPERATURE FLUID SUPPLY SYSTEM)
- 11: CONTAINER
- 12: VEHICLE
- 21: COMPRESSION DEVICE
- 22: EVAPORATION DEVICE
- 23: DISPENSER
- 31: DRIVE UNIT
- 32, 32A, 32B, 32C: PRESSURIZING PUMP
- 33: DRIVE MOTOR
- 34: DRIVE MECHANISM
- 41: ECCENTRIC SHAFT PORTION
- 42: ROTATING BODY
- 43: LINK PORTION
- 44: SWING SHAFT PORTION
- 45: CROSSHEAD
- 46: HOUSING
- 51: CASING
- 51a: CASING MAIN BODY
- 51b: MIDDLE FLANGE PORTION (LID PORTION)
- 52: CYLINDER
- 53: PISTON
- 54, 54A, 54B, 54C: LIQUID HYDROGEN DISCHARGE DEVICE
- 61: SUPPORT PLATE
- 62: LIQUID STORAGE CHAMBER
- 63: SUPPLY PIPE
- 64: GAS DISCHARGE PIPE
- 65: COMPRESSION CHAMBER
- 66: SUCTION VALVE
- 67: EJECT VALVE
- 68: DISCHARGE PIPE
- 71, 71A, 71B: DRAIN PIPE
- 72: PRESSURIZING PIPE
- 73: DRAIN VALVE
- 74: PRESSURIZING SOURCE
- 75: PRESSURIZING VALVE
- 81: LINEAR PORTION
- 82: CURVED PORTION
- 83: OPENING PORTION
- 84: SPIRAL PORTION
- 91: GUIDE MEMBER

## Claims

1. A pressurizing pump comprising:
a casing that stores a low-temperature fluid;
a cylinder that is disposed inside the casing to have a compression chamber, and has an upper end portion in a vertical direction supported by an upper portion of the casing;
a piston that is movably supported inside the cylinder along the vertical direction and compresses a low-temperature fluid sucked into the compression chamber; and
a drain pipe that has one end portion supported by an upper portion of the casing and the other end portion extending to a bottom portion of the casing.

2. The pressurizing pump according to claim 1, wherein the casing includes a casing main body 51a that is a heat insulating structure having a bottomed cylindrical shape, and a lid portion that closes an upper portion of the casing main body 51a, and one end portion of the drain pipe is supported by penetrating the lid portion.

3. The pressurizing pump according to claim 1 or 2, wherein the drain pipe is disposed such that the other end portion of the drain pipe is curved and extends along a bottom surface of the casing.

4. The pressurizing pump according to claim 3, wherein the drain pipe includes a linear portion disposed along the vertical direction inside the casing, a curved portion coupled to a lower end portion of the linear portion, and an opening portion disposed at a front end portion of the curved portion and serving as an opening surface inclined with respect to an axial direction.

5. The pressurizing pump according to claim 1, wherein the drain pipe is provided with a drain valve for opening and closing a flow path outside the casing.

6. The pressurizing pump according to claim 1, further comprising a pressurizing pipe supported by an upper portion of the casing and capable of supplying gas from outside to inside of the casing to pressurize the gas.

7. The pressurizing pump according to claim 6, wherein the pressurizing pipe supplies gas obtained by heating a low-temperature fluid of the same type as the low-temperature fluid stored in the casing to the inside of the casing.

8. The pressurizing pump according to claim 1, wherein the casing has a bottom surface having a curved shape protruding downward in the vertical direction.

9. A low-temperature fluid supply system comprising:
a compression device that includes the pressurizing pump according to claim 1 and compresses a low-temperature fluid;
an evaporation device that vaporizes the low-temperature fluid compressed by the compression device; and
a dispenser that supplies gas vaporized by the evaporation device.

10. A method for discharging a low-temperature fluid in a pressurizing pump, the pressurizing pump including:
a casing that stores a low-temperature fluid;
a cylinder that is disposed inside the casing to have a compression chamber, and has an upper end portion in a vertical direction supported by an upper portion of the casing; and
a piston that is movably supported inside the cylinder along the vertical direction and compresses a low-temperature fluid sucked into the compression chamber, the method comprising:
a step of reciprocating the piston inside the cylinder to discharge a high-pressure low-temperature fluid pressurized in the compression chamber to the outside;
a step of stopping reciprocating the piston when suction of low-temperature fluid into the compression chamber becomes impossible; and
a step of discharging a low-temperature fluid remaining in the casing to the outside using a drain pipe having one end portion supported by an upper portion of the casing and the other end portion extending to a bottom portion of the casing.
